Europäisches Patentamt

European Patent Office

Office européen des brevets

(11) Veröffentlichungsnummer: **0 269 858**
**A2**

## (12) EUROPÄISCHE PATENTANMELDUNG

(21) Anmeldenummer: 87115800.2

(22) Anmeldetag: 28.10.87

(51) Int. Cl.4: **B01D 51/04** , B03C 3/14

(30) Priorität: 28.11.86 DE 3640743

(43) Veröffentlichungstag der Anmeldung:
08.06.88 Patentblatt 88/23

(84) Benannte Vertragsstaaten:
AT FR GB

(71) Anmelder: **Fried. Krupp Gesellschaft mit beschränkter Haftung**
**Altendorfer Strasse 103**
**D-4300 Essen 1(DE)**

(72) Erfinder: **Bork-Brücken, Renate, Dr. rer. nat.**
**Oespeler Dorfstrasse 15**
**D-4600 Dortmund 76(DE)**
Erfinder: **Effelsberg, Heinz, Dipl-Ing.**
**Theodor-Suhnel-Strasse 61**
**D-4330 Mülheim/Ruhr(DE)**
Erfinder: **Hartwig, Jürgen, Dr.-Ing.**
**Büssemstrasse 24**
**D-4300 Essen 14(DE)**
Erfinder: **Kriegel, Ernst, Prof. Dr.-Ing.**
**Juistweg 51**
**D-4300 Essen 1(DE)**

(54) **Verfahren und Vorrichtung zur Feinstreinigung von Abgasen.**

(57) Die Erfindung bezieht sich auf ein Verfahren zur Feinstreinigung von Abgasen.

Nach der Erfindung werden dem Abgas Pilotpartikel zugeführt, die größer sind, als die in diesem enthaltenen Feinststaubpartikel und die sich an die Pilotpartikel anlagern. Die Pilotpartikel und die an diesen angelagerten Feinststaubpartikel werden danach in bekannter Weise mittels Filter abgeschieden.

EP 0 269 858 A2

# Verfahren und Vorrichtung zur Feinstreinigung von Abgasen

Die Erfindung bezieht sich auf ein Verfahren und eine Vorrichtung zur Feinstreinigung von Abgasen.

Es ist bekannt, daß sehr feine Stäube nur unvollständig und nur mit hohem Druckverlust abgeschieden werden können. In vielen Fällen bedarf es der Naßreinigung ggf. mit Vorkonditionierung durch Dampfkondensation an den Staubteilchen. Im Abgas enthaltene Dämpfe lassen sich meist nur durch Naßwäsche oder Adsorption in Festbettschüttungen oder Wirbelschichten entfernen. Hierbei treten hohe Druckverluste auf, auch sind die Durchsatzleistungen gering. Der Einsatz von Tuchfiltern ist durch deren begrenzte Beladbarkeit beschränkt. Schließlich ist auch bei Elektrofiltern eine Abscheidung feinster Partikelfraktionen nicht gewährleistet.

Weitergehende Konzepte zur Feinreinigung sehen eine Kombination aus herkömmlichen Tuchfiltern mit elektrostatischen Abscheidesystemen vor. Dabei werden die abzuscheidenden Partikel aufgeladen oder polarisiert. Auch permanent elektrostatisch aufgeladene Filter bzw. Fasern sind schon untersucht worden. Diese Verfahrensentwicklungen suchen den Abscheidemechanismus und die erforderlichen dichten Filter mit geringer Durchsatzleistung und hohem Druckver lust zu verbessern. Die Probleme, die durch die Feinheit der Partikel bedingt sind, bleiben jedoch weiterhin bestehen.

Eine weitere Möglichkeit zur Feinreinigung bilden sogenannte Ionisationsfilter. Dabei werden nichtleitende Filtermedien statisch aufgeladen, so daß eine Ladungsverteilung über die gesamte innere Oberfläche und damit eine hohe Effektivität des Filters erreicht wird. Auch Abscheidungen in elektrostatisch aufgeladenen Fest-und Wirbelbettschüttungen sind bekannt.

Die Erfindung bezweckt, die Mängel der bisher bekannten Verfahren zur Feinstreinigung von Abgasen zu überwinden. Sie besteht darin, daß sie die Abscheideeffektivität durch die Vergrößerung der abzuscheidenden Teilchen mittels Pilotpartikel und ggf. durch Verlängerung der Verweil-und Kontaktierungszeit zwischen Feinstpartikeln und Pilotpartikeln erhöht. Die Pilotpartikel dienen dazu, die noch im Abgas befindlichen Feinstäube und/oder Aerosole auf einer Reaktionsstrecke oder spätestens bei der gemeinsamen Abscheidung im Filter anzulagern und dadurch eine Vergrößerung der abzuscheidenden Partikel auf die Größe der Pilotmaterialien herbeizuführen. Dadurch können diese in konventionellen Filtern abgeschieden werden. Die zwischen Feinstpartikeln und den Pilotpartikeln herrschenden Kräfte können adhäsive oder elektrostatische Wechselwirkungen sein.

Als Pilotpartikel kommen Teilchen in Form von Stäuben, Fasern oder Faser-Agglomeraten mit hoher Dielektrizitätskonstante in Frage. Die Pilotpartikel werden in das vorgereinigte Abgas eindosiert. Werden permanent geladene oder auf andere nicht elektrostatische Weise adhäsiv wirkende Pilotpartikel eingesetzt, so bewegen sie sich mit den abzuscheidenden Partikeln im Gasstrom durch die Reaktionsstrecke und können miteinander in Wechselwirkung treten, bevor sie im Abscheidefilter erfaßt werden. Werden ungeladene oder zu polarisierende bzw. aufzuladende Pilotpartikel eingesetzt, so passiert der Gasstrom nach der Vermischung zunächst ein elektrisches Feld, in dem eine Aufladung bzw. Polarisierung der Pilotpartikel und ggf. der Feinststäube erfolgt. Im elektrischen Feld bewegen sich die Pilotpartikel mit den Feinststäuben in der Reaktionszone auf den Abscheidefilter zu. Aufgrund von adhäsiven oder elektrostatischen Kräften treten die Feinststäube und/oder Aerosole sowie die Pilotpartikel miteinander in Wechselwirkung und führen zur Vergrößerung der abzuscheidenden feinsten Teile auf die Größe der Pilotpartikel.

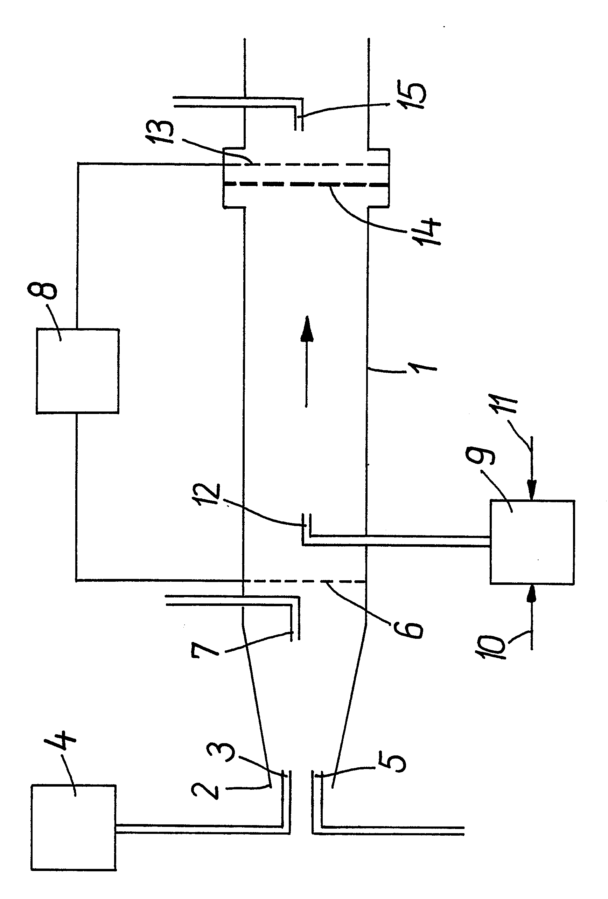

In der Zeichnung ist eine Vorrichtung zur Durchführung des den Gegenstand bildenden Verfahrens dargestellt, und zwar zeigt diese Fig. den Aufbau eines als Versuchsanlage zur Feinstreinigung von Gasen mit Pilotpartikeln mit oder ohne Aufladung dienenden Abscheiders.

Diese Anlage besteht aus einem Glasrohr 1, an dessen vorderem Ende 2 sich ein Einlaßstutzen 3 für von einem Aerosolgenerator 4 erzeugte Aerosole und ein Einlaßstutzen 5 für Preßluft befinden. Der Gasstrom aus Luft und Aerosolen passiert zunächst eine als positive Elektrode geschaltete Lochplatte 6, wo eine elektrostatische Aufladung bzw. Polarisierung der in ihm mitgeführten Partikel erfolgt. Vor der Lochplatte 6 ist eine Vorrichtung 7 zur Probeentnahme angeordnet. Hinter der Lochplatte 6 ist der Einlaßstutzen 12 für die Pilotpartikel angeordnet. Mit 8 ist ein Hochspannungsgenerator zur Aufladung derselben bezeichnet. Mit 9 ist eine Vorrichtung zur Erzeugung eines Gemisches aus Pilotpartikeln und Feinststaub bezeichnet, der bei 10 Staub und bei 11 gereinigte Luft zugeführt wird. Dieses Gemisch wird durch den Einlaß 12 dem Aerosol-Luftgemisch, das durch die Lochplatte 6 strömt, zugemischt. Im elektrischen Feld bewegen sich die Teilchen, nämlich die abzuscheidenden Partikel und die Pilotpartikel, auf die negative Elektrode 13 und den direkt davor befindlichen Abscheidefilter 14 zu. Hinter der Elektrode 13 und dem Abscheidefilter 14 ist eine weitere Probeentnahmestelle 15 angeordnet, um die Korngrößenverteilung, Konzentration und Zusammensetzung im gereinigten Gas zu bestimmen.

Die Erfindung kann beispielsweise bei der Rauchgaswäsche angewandt werden, bei der $SO_2$ und HCl, bedingt durch den $NH_3$-Partialdruck, entstehen und die mittels einer $NH_4$ OH-Lösung beseitigt werden sollen. Dabei entstehen über den Lösungen $NH_4$ Cl-Aerosole, deren Abscheidung nach dem heutigen Stand der Technik sehr schwierig ist. Diese Aerosole können beim Einsatz der Erfindung durch Anlagerung an Pilotpartikel gebunden und mit diesen abgeschieden werden. Besonders vorteilhaft können als Pilotpartikel beim Einsatz der Erfindung feinste Fasern aus Aramiden, Polyester, Polyamiden, Glas oder Zellulose verwendet werden.

## Ansprüche

1. Verfahren zur Feinstreinigung von Abgasen, **dadurch gekennzeichnet,** daß den im Abgas enthaltenen Feinststaubpartikeln Pilotpartikel zugesetzt werden, die größer sind als die Feinststaubpartikel und die sich an diese anlagern.

2. Verfahren nach Anspruch 1, dadurch gekennzeichnet, daß die Pilotpartikel vor der Endabscheidung an konventionellen Filtern zugesetzt werden.

3. Verfahren nach Anspruch 1 oder 2, dadurch gekennzeichnet, daß die Pilotpartikel Teilchen aus einem Material sind, das eine hohe Dielektrizitätskonstante besitzt.

4. Verfahren nach einem der Ansprüche 1 bis 3, dadurch gekennzeichnet, daß die Pilotpartikel Teilchen aus einem Material sind, das einen hohen Oberflächenwiderstand besitzt.

5. Verfahren nach einem der Ansprüche 1 bis 4, dadurch gekennzeichnet, daß die Anlagerung der Pilotpartikel an die Feinststäube und/oder Aerosole bei zusätzlicher Aufladung in einem elektrischen Feld erfolgt.

6. Verfahren nach einem der Ansprüche 1 bis 5, dadurch gekennzeichnet, daß als Pilotpartikel Staubteilchen verwendet werden.

7. Verfahren nach einem der Ansprüche 1 bis 5, dadurch gekennzeichnet, daß als Pilotpartikel Fasern verwendet werden.

8. Verfahren nach einem der Ansprüche 1 bis 5, dadurch gekennzeichnet, daß als Pilotpartikel feinste Fasern aus Aramiden, Polyester, Polyamiden, Glas oder Zellulose verwendet werden.

9. Verfahren nach einem der Ansprüche 1 bis 8, dadurch gekennzeichnet, daß die Pilotpartikel in einem elektrischen Feld permanent aufgeladene Teilchen sind.

10. Verfahren nach einem der Ansprüche 1 bis 9, dadurch gekennzeichnet, daß die Pilotpartikel in einem elektrischen Feld polarisiert sind.

11. Vorrichtung zur Durchführung des Verfahrens nach einem der Ansprüche 1 bis 10, gekennzeichnet durch ein Rohr (1), dem das Abgas zugeführt und in dem über einen Einlaßstutzen (12) Pilotpartikel zugeführt werden, an die sich die Feinstteilchen im Abgas anlagern und an dessen Ende ein zur Abscheidung von Pilotpartikeln und angesammelten Feinstteilchen geeigneter Filter (14) angeordnet ist.

12. Vorrichtung nach Anspruch 11, dadurch gekennzeichnet, daß in dem Rohr (1) vor dem Einlaßstutzen (12) für die Pilotpartikel eine positive Elektrode und hinter dem Filter (14) eine negative Elektrode angeordnet ist.